# EUROPEAN PATENT APPLICATION

(11) **EP 2 164 065 A1**
(43) Date of publication of application: **17.03.2010**
(21) Application number: 08790097.3
(22) Date of filing: 30.06.2008
(51) Int. Cl.: G09G 5/36, G09G 5/00, H04N 5/44, H04N 5/66

(54) **MODE-CHANGEOVER DEVICE**

(30) Priority: 04.07.2007 JP 2007175821
(71) Applicant: Panasonic Corporation, Kadoma-shi Osaka 571-8501 (JP)
(72) Inventor: MIZUGUCHI, Yuji, Osaka 540-6207 (JP)
(74) Representative: Grünecker, Kinkeldey, Stockmair & Schwanhäusser Anwaltssozietät
(86) International application number: PCT/JP2008/001698
(87) International publication number: WO 2009/004782

(57) **Abstract**

A mode-changeover device is provided for enabling observers' eyes to easily follow a display video image during the change of its display magnification. In a mode-changeover device (1), a plurality of first magnifications are allocated in advance to either one of the horizontal direction and the vertical direction of a video image while a plurality of second magnifications are allocated in advance to the other. Whenever an observer operates, a CPU (151) in the mode-changeover device (1) selects the second magnifications one by one with either one of the first magnifications fixedly selected and then selects the second magnifications one by one with another one of the first magnifications fixedly selected. Further, whenever the CPU (151) selects the first and second magnifications, a video image processing circuit (12) magnifies the input video image in accordance with the selected magnifications. A screen (13) displays the video image magnified by the video image processing circuit (12).

## Description

### Technical Field

The present invention relates to a mode switching apparatus. More particularly, the present invention relates to a mode switching apparatus that displays an input video image by changing the display magnification in response to operations by viewers and changing the magnification of the input video image based on the changed display magnification.

### Background Art

A remote controller and a television receiver (hereinafter "TV receiver") will be explained below as conventional mode switching apparatuses. When the viewer desires to switch the display magnification (i.e. display aspect ratio) of the television receiver, the viewer operates a wide mode switching operation section provided in the remote controller. In response to this operation, the remote controller transmits data for changing the display magnification to the TV receiver. Each time the TV receiver receives this data, the TV receiver sequentially switches the display magnification (see, for example, following Patent Document 1).
Patent Document 1: Japanese Patent Application Laid-Open No.HE18-340462

### Disclosure of Invention

### Problems to be Solved by the Invention

With conventional TV receivers, cases occur where, when a certain display magnification changes to another display magnification, for example, the new display image is enlarged in the horizontal direction compared to the previous display image. Furthermore, when this new display magnification changes to yet another display magnification, the new display image might then be enlarged in the vertical direction compared to the previous display image. In this way, with conventional TV receivers, cases occur where, while the display magnification is switched, the display image is enlarged in the horizontal direction and in the vertical direction, alternately, and a series of these operations are repeated. When the display magnification is switched in this way, a problem occurs that viewers have difficulty in following display images.

It is therefore an object of the present invention to provide a mode switching apparatus that can provide display images that the viewers' eyes can easily follow while the display magnification changes.

### Means for Solving the Problem

To achieve the above object, one aspect of the present invention is generally directed to a mode switching apparatus. With a mode switching apparatus comprising, a plurality of first zoom rates are determined in advance in one of a horizontal direction and a vertical direction of a video image and a plurality of second zoom rates are determined in advance in the other one of the horizontal direction and the vertical direction. The mode switching apparatus has: a selecting section that, in response to an operation by a viewer, selects the plurality of second zoom rates one by one while one of the plurality of first zoom rates is selected in a fixed fashion, and then selects the plurality of second zoom rates one by one while another one of the plurality of first zoom rates is selected in a fixed fashion; an image processing section that, each time a first zoom rate and a second zoom rate are selected in the selecting section, changes a magnification of an input video image based on the selected first zoom rate and second zoom rate; and a screen that displays the magnified video image magnified in the image processing section.

### Advantageous Effects of Invention

According to the above aspect of the present invention, in response to operations by the viewer, a pair (i.e. display magnification) of a first zoom rate and a second zoom rate are determined one by one. An input video image is displayed by changing the magnification of the input video image based on these first zoom rate and second zoom rate, in response to operations by the viewer. During this image display, there is a period in which the first zoom rate is maintained at a fixed value. During this time, the magnified video image is enlarged only in one of the horizontal direction and the vertical direction. By displaying a series of such magnified video images, the movement of the viewers' eyes can be limited to one direction, so that it is possible to provide a mode switching apparatus that can provide display images that the viewers' eyes can easily follow while the display magnification changes.

### Brief Description of Drawings

FIG.1 is a block diagram showing a configuration of a mode switching apparatus 1 according to an embodiment of the present invention;
FIG.2 schematically shows content of a table 154;
FIG.3 is a flowchart showing the operations of a remote controller 2;
FIG.4 is a flowchart showing the operations of the mode switching apparatus 1;
FIG.5 is a schematic view showing the first half of transition of magnified video image A1;
FIG.6 is a schematic view showing the second half of transition of magnified video image A1;
FIG.7 schematically shows a first alternative example of content of the table 154;
FIG.8 schematically shows a second alternative example of content of the table 154; and
FIG.9 schematically shows a third alternative example of content of the table 154.

### Best Mode for Carrying Out the Invention

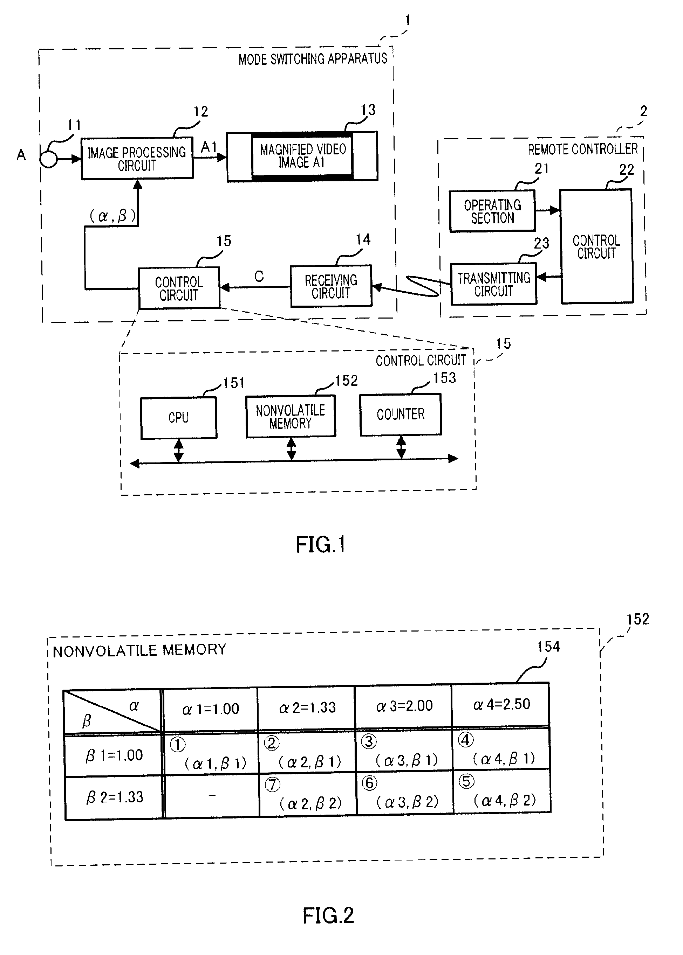

FIG.1 is a block diagram showing the configuration of a mode switching apparatus 1 according to an embodiment of the present invention. Further, FIG.1 shows a remote controller 2 that functions with the mode switching apparatus 1.

First, the configuration of the mode switching apparatus 1 will be explained. The mode switching apparatus 1 is, for example, a vehicle display apparatus, and has an input terminal 11, an image processing circuit 12, a screen 13, a receiving circuit 14 and a control circuit 15. The processing in each component of the mode switching apparatus 1 will be schematically explained below.

The image processing circuit 12 receives as input video image A through the input terminal 11. The image processing circuit 12 generates magnified video image A1 by changing the magnification of input video image A based on the display magnification specified by the control circuit 15 (described later). Generated magnified video image A1 is outputted to the screen 13. Note that, with the present embodiment, "magnification" is not limited to "enlargement" and "reduction" in size, and also covers "1.0× magnification."

The screen 13 is formed with a liquid crystal panel having the display aspect ratio greater than, for example, 16:9. This screen 13 is provided in the ceiling of a car compartment such that viewers in the rear seats of the vehicle can view video images. Preferably, in case where the screen 13 is provided in the ceiling in this way, the display aspect ratio is approximately 10:3 such that viewers can enjoy wide, large images and the driver's rear view is still secured. This screen 13 presents magnified video image A1 outputted from the image processing circuit 12 to viewers.

The receiving circuit 14 receives command C transmitted from a transmitting circuit 23 (described later) of the remote controller 2, and gives received command C to the control circuit 15. Command C is used to switch the screen mode.

The control circuit 15 includes at least a CPU (Central Processing Unit) 151, a nonvolatile memory 152 and a counter 153.

The CPU 151 determines the horizontal and vertical zoom rates of input video image A in response to a predetermined event, and gives the combination of the determined zoom rates as the display magnification, to the image processing circuit 12.

Typical examples of the above predetermined event include turn-on of power and reception of command C (described later) from the remote controller 2. When power is turned on for the first time, the display magnification reported to the image processing circuit 12 is configured with a combination of the horizontal zoom rate and the vertical zoom rate set as default, and, when power is turned on for the second time or afterward, the display magnification is configured with a combination of the horizontal zoom rate and the vertical zoom rate used in last mode, that is, used immediately before power was turned off last time. These default display magnification and display magnification in last mode are stored in the nonvolatile memory 152.

Further, the CPU 151 receives command C from the receiving circuit 14, and, upon finding that received command C is used to switch the screen mode, determines the vertical and horizontal zoom rates of input video image A. These magnifications are determined using the table 154 stored in the nonvolatile memory 152 in advance and the counter 153. Hereinafter, the table 154 will be explained.

FIG.2 schematically shows content of the table 154. In the row direction of the table 154 of FIG.2, a plurality of rates for enlarging input video image A in the horizontal direction α (hereinafter, "horizontal zoom rates") are listed. With the present embodiment, four horizontal zoom rates α1 (=1.00), α2 (=1.33), α3 (=2.00) and α4 (=2.50) are illustrated as a plurality of horizontal zoom rates α. Further, in the column direction of the table 154, a plurality of rates for enlarging input video image A in the vertical direction (hereinafter "vertical zoom rates") are listed. With the present embodiment, two vertical zoom rates β1 (=1.00) and β2 (=1.33) are illustrated as a plurality of vertical zoom rates β.

With the present embodiment, screen mode is defined by the display magnification of input video image A, and this display magnification is determined by the combination of a horizontal zoom rate α and a vertical zoom rate β, as described above. The combination of a horizontal zoom rate α and a vertical zoom rate β will be represented by (α, β).

Further, with the present embodiment, screen mode is switched by means of a toggle. Therefore, the order of switching by the toggle is designated in the table 154. That is, the first to be subjected to switching by the toggle is the display magnification, (α1, β1), followed by (α2, β1), (α3, β1), (α4, β1), (α4, β2), (α3, β2) and (α2, β2) in turn. Further, (α2, β2) then returns back to (α1, β1).

Next, the counter 153 will be explained with reference to FIG.1 again. The counter 153 counts from one to the number of display magnifications (which is seven with the present embodiment) in order to indicate the order of switching by the toggle.

In the control circuit 15, each time command C is received from the receiving circuit 14, the CPU 151 selects the display magnification of the order indicated by the current value on the counter 153, from the table 154 stored in the nonvolatile memory 152. Then, CPU 151 gives the selected display magnification to the image processing circuit 12.

As described above, the remote controller 2 is also shown in FIG.1. The remote controller 2 is operated by the viewer viewing the mode switching apparatus 1, and has an operating section 21, a control circuit 22 and a transmitting circuit 23. The processing in each component of the remote controller 2 will be schematically explained below.

The operating section 21 has keys or buttons arranged in the casing of the remote controller 2 such that viewers can operate them. In response to the operation by the viewer, the operating section 21 inputs a predetermined signal to the control circuit 22.

The configuration of the control circuit 22 is the same as in the control circuit 15. The control circuit 22 is connected to an output end of the operating section 21, and is further connected to an input end of the transmitting circuit 23.

When receiving an output signal from the operating section 21, the control circuit 22 with the above configuration generates command C for switching screen mode (i.e. display magnification) of the mode switching apparatus 1 by the toggle, and outputs command C to the transmitting circuit 23.

The transmitting circuit 23 transmits command C from the control circuit 22, to the receiving circuit 14 of the mode switching apparatus 1.

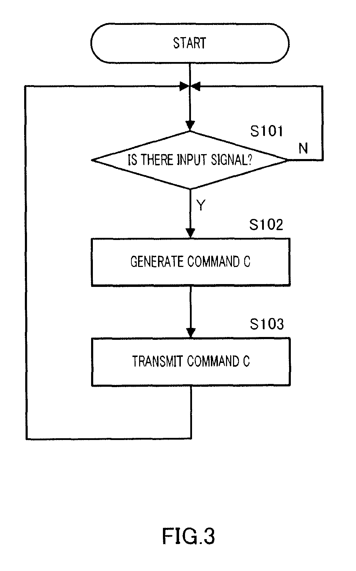

Next, the operations of the mode switching apparatus 1 and remote controller 2 configured as described above will be explained. First, the operation of the remote controller 2 will be explained below with reference to the flowchart of FIG.3. In FIG.3, when receiving an output signal from the operating section 21 (step S101), the control circuit 22 of the remote controller 2 generates above-described command C and outputs command C to the transmitting circuit 23 (step S102).

Next, the transmitting circuit 23 transmits command C currently received from the control circuit 22, to the receiving circuit 14 of the mode switching apparatus 1 (step S103). After step S103 is finished, processing in the control circuit 22 returns back to step S101.

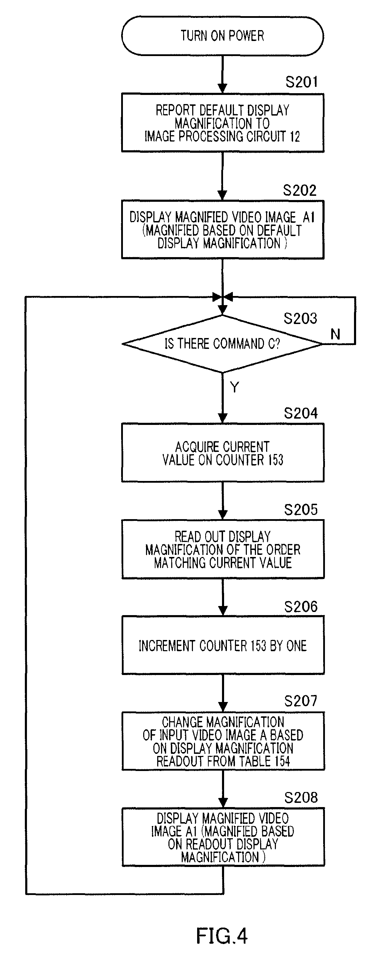

Next, the operation of the mode switching apparatus 1 will be explained with reference to the flowchart of FIG.4. In FIG.4, when the mode switching apparatus 1 is powered on, video image A starts being inputted to the image processing circuit 12 through the input terminal 11 and CPU 151 reads out the default display magnification or the display magnification in last mode from the nonvolatile memory as the default display magnification and reports the display magnification to the image processing circuit 12 (step S201).

The image processing circuit 12 changes the magnification of input video image A in the horizontal direction based on the horizontal zoom rate included in the default display magnification from the control circuit 12, and changes the magnification of input video image A in the vertical direction based on the vertical zoom rate included in the same display magnification. Magnified video image A1 generated in this way is displayed on the screen 13 (step S202).

Next, the CPU 151 decides whether or not command C is received from the receiving circuit 14 (step S203). In case of "No," it is not necessary to change the display magnification that is currently set, and therefore the CPU 151 returns the processing back to step S203 to wait for command C to arrive.

By contrast with this, in case where "Yes" is decided in step S203, the CPU 151 acquires the current value on the counter 153 (step S204), reads out the display magnification of the order indicated by the acquired current value, from the table 154 and reports the display magnification to the image processing circuit 12 (step S205). The CPU 151 further increments the value on the counter 153 by one (step S206).

The image processing circuit 12 changes the magnification of input video image A in the horizontal direction based on the horizontal zoom rate included in the display magnification currently received from the control circuit 12, and changes the magnification of input video image A in the vertical direction based on the vertical zoom rate included in the same display magnification (step S207). Magnified video image A1 generated in this way is displayed on the screen 13 (step S208). The CPU 151 returns the processing back to step S203 to wait for command C to arrive.

When the above operation is repeated, the display magnification is set to (α1, β1) in response to first command C arrived from the remote controller 2, the display magnification is set to (α2, β1) in response to second command C, and the display magnification is set to (α3, β1) in response to third command C. Then, according to fourth, fifth, sixth and seventh commands C, the display magnification is set to (α4, β1), (α4,β2), (α3, β2) and (α2, β2), respectively. Further, in response to eighth command C, the display magnification is set to (α1, β1), which is first in the order. Further, in FIG.2, the order of display magnifications is indicated by encircled numbers.

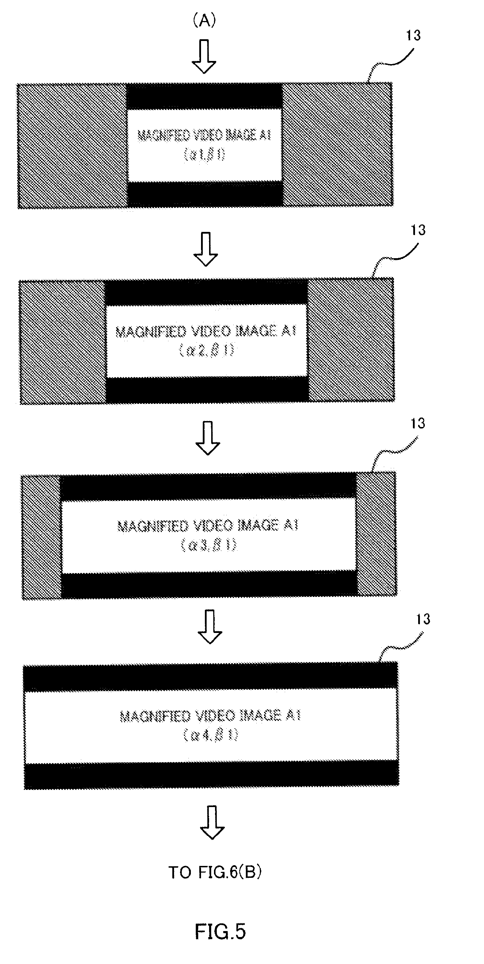

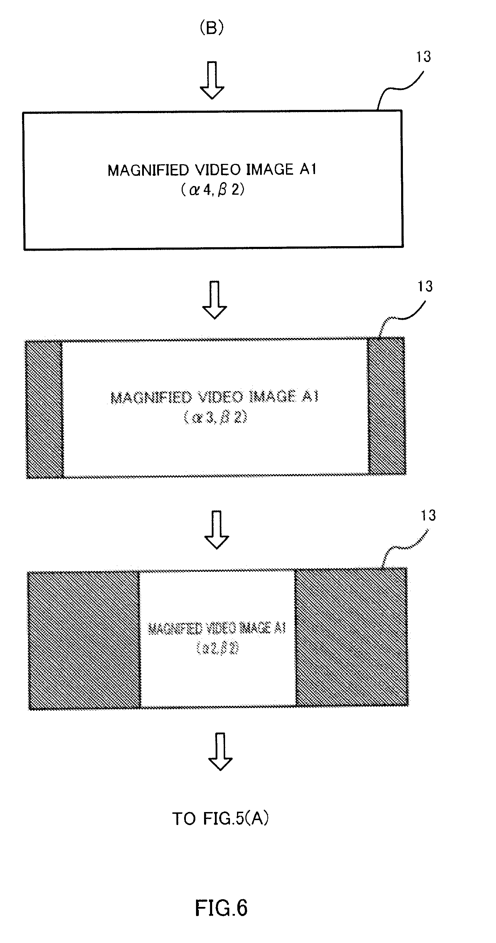

When the display magnification is set as described above, as shown in FIG.5 and FIG.6, magnified video image A1 magnified based on the display magnification (α1,β1), is displayed on the screen 13 and, next, magnified video image A1 magnified based on the display magnification (α2, β1), is displayed on the screen 13. Then, as shown in FIG.5 and FIG.6, magnified video images A1 magnified in order of (α3, β1), (α4, β1), (α4, β2), (α3, β2) and (α2, β2), are displayed on the screen 13.

Here, in case where input video image A has the format of CinemaScope (registered trademark), if the magnification of input video image A is changed in the vertical direction based on the vertical zoom rate β1 (=1.00× magnification), black belt portions remain in the upper and lower parts of magnified video image A1. By contrast with this, if the magnification of input video image A in CinemaScope format is changed based on a vertical zoom rate β2 (=1.33 × magnification), it is possible to display content portion of input video image A, that is, the portion not including the black belt portions of input video image A, in the vertical direction over the entire screen 13. To be more specific, in this case, the black belt portions are cut.

Similarly, by setting the horizontal zoom rate α4 to 2.50× magnification, it is possible to display the content portion of input video image A in the horizontal direction over the entire screen 13.

In this way, when the display magnification factor is defined as (α4, β2), the display area in the screen 13 can be maximized, so that the mode switching apparatus 1 makes it possible to secure the driver's rear view and provide wide, large magnified video image A1 to viewers.

As explained above, according to the mode switching apparatus 1 of the present invention, each time the viewer operates the operating section 21, command C for switching the screen mode is transmitted from the remote controller 2 to the mode switching apparatus 1. In the mode switching apparatus 1, each time command C is received, the CPU 151 determines the display magnification to select from the table 154, according the current value on the counter 153. With the display magnification determined in this way, while a vertical zoom rate β is set to a fixed value, a horizontal zoom rate α is incremented each time the CPU 151 receives command C. When a horizontal zoom rate α reaches the maximum value (α4=2.5), a vertical zoom rate β is set to another value (β2=1.33). Afterward, while a new zoom rate β is set to a fixed value, a value that is decremented one step is selected for the horizontal zoom rate α each time command C is received.

When the display magnification is switched as described above, as shown in FIG.5 and FIG.6, the magnification of magnified video image A1 to be displayed on the screen 13 is changed only in one of the vertical direction and the horizontal direction upon comparison of the display magnification that is not changed and the display magnification that is changed. In this way, the movement of the viewers' eyes can be limited to one direction, so that it is possible to provide the mode switching apparatus 1 that can provide display images that the viewers' eyes can easily follow while the display magnification changes.

Further, as explained above with reference to FIG.2, the display magnification switches from (α4, β1) to (α4, β2) in order to minimize the movement of the viewers' eyes. That is, when a vertical zoom rate β switches from β1 to β2, α2 of the same value is selected for a horizontal zoom rate α. Further, while a vertical zoom rate β1 is selected in a fixed fashion, a horizontal zoom rate α is selected in ascending order of α1, α2, α3 and α4, and is selected in descending order of α4, α3 and α2 after the vertical zoom rate β changes to β2.

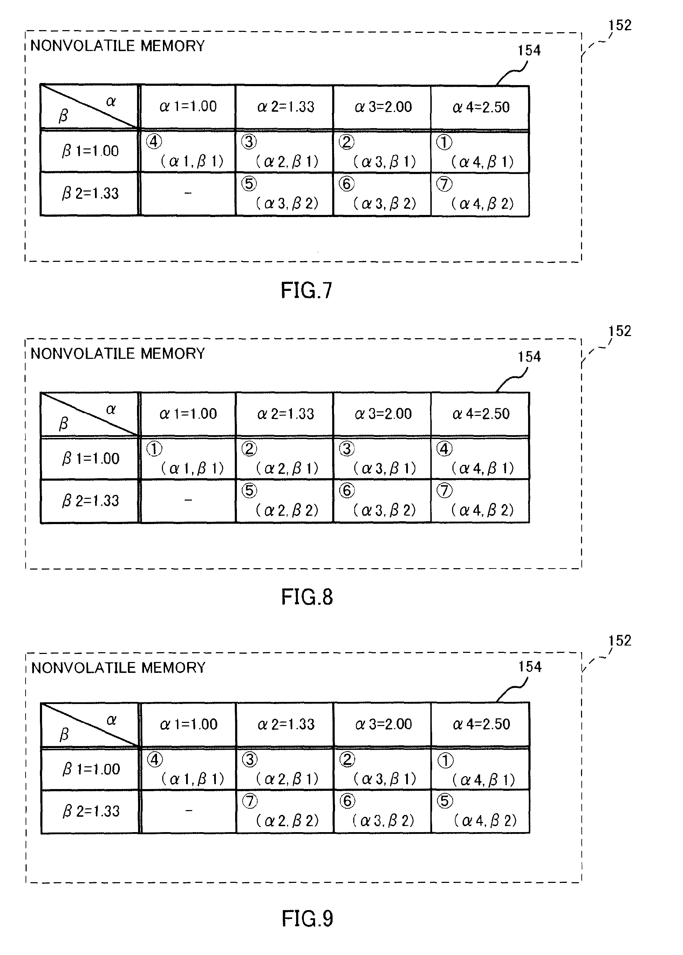

The above embodiment describes the best mode, and the table 154 shown in FIG.7 may additionally be stored in the nonvolatile memory 152. With the example of FIG.7, while a vertical zoom rate β is fixed to β1, a horizontal zoom rate α is selected in descending order of α4, α3, α2 and α1, and, while a vertical zoom rate β is fixed to β2, a horizontal zoom rate α is selected in ascending order of α2, α3 and α4. In this case, the vertical zoom rate β switches from β1 to β2 of a different value, and the horizontal zoom rate α switches from α1 to α2 of a different value. In this way, the display magnification switches from (α1, β1) to (α2, β2), and, only in this case, upon comparison of the display magnification that is not changed and the display magnification that is changed, the magnification of magnified video image A1 is changed in both the vertical direction and the horizontal direction. However, other than this case, the movement of the viewers' eyes can be limited to one direction, so that it is possible to provide the mode switching apparatus 1 that can provide display images that the viewers' eyes can easily follow while the display magnification changes.

Additionally, the table 154 shown in FIG.8 may be stored in the nonvolatile memory 152. With the example of FIG.8, when a vertical zoom rate β switches from β1 to β2, a horizontal zoom rate α switches from, for example, α4 to α2 of a different value. In this case, magnified video images A1 magnified in order of (α1, β1), (α2, β1), (α3, β1), (α4, β1), (α2, β2), (α3, β2) and (α4, β2), are displayed on the screen 13. In this case, while a vertical zoom rate β1 is selected in a fixed fashion, a horizontal zoom rate α is selected in ascending order of α1, α2, α3 and α4, and is selected in ascending order of α2, α3 and α4 after the vertical zoom rate β changes to β2. Also in this case, similar to the example of FIG.7, the display magnification switches from (α4, β1) to (α2, β2) and, upon comparison of the display magnification that is changed and the display magnification that is not changed, the magnification of magnified video image A1 is changed in both the vertical direction and the horizontal direction. However, other than this case, the movement of the viewers' eyes can be limited to one direction, so that it is possible to provide the mode switching apparatus 1 that can provide display images that the viewers' eyes can easily follow while the display magnification changes.

Additionally, the table 154 shown in FIG.9 may be stored in the nonvolatile memory 152. With the example of FIG.9, magnification of magnified video image A1 magnified in order of (α4, β1), (α3, β1), (α2, β1), (α1, β1), (α4, β2), (α3, β2) and (α2, β2), are displayed on the screen 13. In this case, while a vertical zoom rate β1 is selected in a fixed fashion, a horizontal zoom rate α is selected in descending order of α4, α3, α2 and α1, and is selected in descending order of α4, α3 and α2 after the vertical zoom rate β changes to β2. Also in this case, the display magnification changes from (α1, β1) to (α4, β2) and, upon comparison of the display magnification that is not changed and the display magnification that is changed, the magnification of magnified video image A1 is changed in both the vertical direction and the horizontal direction. However, other than this case, the movement of the viewers' eyes can be limited to one direction, so that it is possible to provide the mode switching apparatus 1 that can provide display images that the viewers' eyes can easily follow while the display magnification changes.

The disclosure of Japanese Patent Application No.2007-175821, filed on July 4, 2007, including the specification, drawings and abstract, is incorporated herein by reference in its entirety.

### Industrial Applicability

The mode switching apparatus according to the present invention is suitable for vehicle display apparatuses that need to present display images that the viewers' eyes can easily follow while the display magnification changes.

## Claims

1. A mode switching apparatus comprising:
a selecting section that employs a plurality of first zoom rates determined in advance in one of a horizontal direction and a vertical direction of a video image and a plurality of second zoom rates determined in advance in the other one of the horizontal direction and the vertical direction, and that, in response to an operation by a viewer, selects the plurality of second zoom rates one by one while one of the plurality of first zoom rates is selected in a fixed fashion, and then selects the plurality of second zoom rates one by one while another one of the plurality of first zoom rates is selected in a fixed fashion;
an image processing section that, each time a first zoom rate and a second zoom rate are selected in the selecting section, changes a magnification of an input video image based on the selected first zoom rate and second zoom rate; and
a screen that displays the magnified video image magnified in the image processing section.

2. The mode switching apparatus according to claim 1,
wherein, when one of the plurality of first zoom rates changes to another first zoom rate, the selecting section selects the same second zoom rate.

3. The mode switching apparatus according to claim 2,
wherein the selecting section selects the plurality of second zoom rates one by one in ascending order while one of the plurality of first zoom rates is selected in a fixed fashion, and then selects the plurality of second zoom rates one by one in descending order while another one of the plurality of first zoom rates is selected in a fixed fashion.

4. The mode switching apparatus according to claim 2,
wherein the selecting section selects the plurality of second zoom rates one by one in descending order while one of the plurality of first zoom rates is selected in a fixed fashion, and then selects the plurality of second zoom rates one by one in ascending order while another one of the plurality of first zoom rates is selected in a fixed fashion.

5. The mode switching apparatus according to claim 1,
wherein, when one of the plurality of first zoom rates changes to another first zoom rate, the selecting section selects another second zoom rate.

6. The mode switching apparatus according to claim 5,
wherein the selecting section selects the plurality of second zoom rates one by one in ascending order while one of the plurality of first zoom rates is selected in a fixed fashion, and then selects the plurality of second zoom rates one by one in ascending order while another one of the plurality of first zoom rates is selected in a fixed fashion.

7. The mode switching apparatus according to claim 5,
wherein the selecting section selects the plurality of second zoom rates one by one in descending order while one of the plurality of first zoom rates is selected in a fixed fashion, and then selects the plurality of second zoom rates one by one in descending order while another one of the plurality of first zoom rates is selected in a fixed fashion.

8. The mode switching apparatus according to claim 1,
wherein a display aspect ratio of the screen is greater than sixteen to nine.

9. The mode switching apparatus according to claim 8,
wherein the display aspect ratio is ten to three.
